# FASCICULE DE BREVET EUROPEEN

(11) **EP 3 795 041 B1**
(45) Date de publication et mention de la délivrance du brevet: **13.11.2024**
(21) Numéro de dépôt: 20196163.8
(22) Date de dépôt: 15.09.2020
(51) Int. Cl.: A47J 37/06

(54) **ACCESSOIRE POUR LE RECHAUFFAGE DE TRANCHES DE PAIN SUR UN APPAREIL DE CUISSON DE TYPE PLANCHA OU BARBECUE**
ZUBEHÖRTEIL ZUM AUFWÄRMEN VON BROTSCHEIBEN AUF EINEM KOCHGERÄT VOM TYP PLANCHA ODER GRILL
ACCESSORY FOR HEATING SLICES OF BREAD ON A COOKING APPLIANCE SUCH AS A GRIDDLE OR BARBECUE

(30) Priorité: 20.09.2019 FR 1910396
(43) Date de publication de la demande: 24.03.2021
(73) Titulaire: SEB S.A., 69130 Ecully (FR)
(72) Inventeur: BESSON, Jean-Christophe, 74600 SEYNOD (FR)
(74) Mandataire: SEB Développement

(56) Documents cités:
- US-A- 2 616 360
- US-A1- 2018 344 092
- US-B1- 8 627 764
- US-S- D 658 939
- GARTEN ANONYMOUS: "Amazy Spareribs-Halter inkl. Abtropfpfanne + Marinierspritze - Multifunktionaler Rippchenhalter für die Zubereitung von Spareribs oder Braten (Edelstahl)", 23 January 2018 (2018-01-23), XP055768101, Retrieved from the Internet <URL:https://www.amazon.de/Amazy-Spareribs-Halter-inkl-Abtropfpfanne-Marinierspritze/dp/B0797T7W5Y> [retrieved on 20210122]

## Description

### Domaine technique

La présente invention concerne le domaine des appareils de cuisson qui comporte une surface de chauffe sur laquelle peuvent être déposés des aliments à cuire, un tel appareil étant notamment du type plancha ou barbecue, la surface étant une plaque pleine, une plaque ajourée ou une grille.

L'invention porte plus particulièrement sur un accessoire qui peut être rapporté sur cette surface de chauffe, afin de permettre le réchauffage de tranches de pain ou la formation de légère croûte en surface desdites tranches de pain. Une utilisation spécifique d'un tel accessoire est prévue pour les tranches de pain à hamburger, familièrement appelées des « buns », lors de la préparation de hamburger.

### Etat de la technique

Il est déjà connu divers accessoires qui peuvent être rapportés sur une surface de chauffe d'un appareil de cuisson et qui permettent de supporter des aliments. Les antériorités publiées sous les numéros US4458585A, US4559869A, US5730046A, US7281469B1 et US9730553B2 divulguent de tels accessoires.

Un autre accessoire est connu d'après une offre de vente d'Amazon : «Amazy Spareribs-Halter inkl. Abtropfpfanne + Marinierspritze - Multifunktionaler Rippchenhalter für die Zubereitung von Spareribs oder Braten (Edelstahl)» (XP055768101).

Ces divers accessoires sont aptes à être positionnés sur une surface de chauffe se présentant sous la forme d'une grille de barbecue. En outre, ces divers accessoires comprennent un organe de support des aliments afin de les maintenir dans une position déterminée au-dessus de la surface de chauffe durant leur cuisson.

Les conceptions de ces accessoires ne sont pas adaptées pour le réchauffage de tranches de pain. En effet, pour autant que l'organe de support soit adapté pour maintenir des tranches de pain, lesdites tranches de pain auraient tendance à cuire ou à griller lors de leur disposition sur de tels accessoires placés sur une surface de chauffe d'un appareil de cuisson de type barbecue ou plancha.

### Exposé de l'invention

L'invention a pour principal objectif de permettre le réchauffage de tranches de pain au moyen d'un accessoire pouvant être positionné sur un appareil de cuisson de type plancha ou barbecue, en évitant de cuire ou de griller lesdites tranches de pain.

A cet effet, l'invention porte sur un accessoire pour un appareil de cuisson équipé d'une surface de chauffe, tel qu'une plancha ou un barbecue, ledit accessoire étant apte à être positionné sur la surface de chauffe.

Selon l'invention, l'accessoire comprend un organe de support d'au moins deux tranches de pain, notamment des tranches de pain à hamburger pour la préparation de hamburger. L'organe de support peut toutefois être adapté à d'autres types de tranches de pain permettant de prendre en sandwich un autre aliment tel que de la viande.

Selon l'invention, l'organe de support est configuré pour maintenir les au moins deux tranches de pain à une distance comprise entre 30 et 40 mm de la surface de chauffe.

Ce positionnement et cette distance permettent de réchauffer les tranches de pain sans les cuire ou les griller.

Selon une réalisation de l'accessoire objet de l'invention, l'organe de support est configuré pour maintenir entre six et dix tranches de pain, de préférence huit tranches de pain, en disposant lesdites tranches de pain parallèlement les unes à la suite des autres. Cela permettra la réalisation simultanée de quatre hamburgers.

Selon l'invention, l'organe de support comprend deux tiges longitudinales disposées parallèlement dans un plan plus ou moins horizontal lorsque ledit accessoire est positionné sur ladite surface de chauffe. En outre, l'organe de support comprend au moins trois tiges courbées en arc de cercle dont les deux extrémités sont fixées respectivement aux deux tiges longitudinales. Ces tiges courbées sont espacées entre elles et disposées parallèlement les unes à la suite des autres et perpendiculairement aux deux tiges longitudinales. De cette manière, les au moins deux tranches de pain reposent sur les deux tiges longitudinales et sont intercalées entre les tiges courbées qui assurent leur maintien plus ou moins verticalement.

En outre, selon l'invention l'accessoire comprend un organe réflecteur configuré pour être positionné entre la surface de chauffe et l'organe de support des au moins deux tranches de pain de sorte à éviter une exposition directe des au moins deux tranches de pain aux rayonnements thermiques directs des éléments chauffants. En d'autres termes, cet organe réflecteur fait obstacle aux rayonnements thermiques directs de la surface de chauffe-des éléments chauffants pour les empêcher de se propager jusqu'aux tranches de pain maintenues par l'organe de support. Ainsi, les tranches de pain disposées sur l'accessoire se réchauffent sans cuire ni griller sous l'action des rayonnements thermiques directs des éléments chauffants.

Selon l'invention, l'organe réflecteur comprend une plaque principale qui s'étend parallèlement à la surface de chauffe, en-dessous de l'organe de support, lorsque ledit accessoire est positionné sur ladite surface de chauffe. La forme de cette plaque principale pourra varier selon la manière dont sont disposées les au moins deux tranches de pain sur l'organe de support, l'objectif étant que ladite plaque principale présente une surface correspondant à celle occupée par les au moins deux tranches de pain maintenues au-dessus de la surface de chauffe par l'organe de support, avec un écartement vis-à-vis de ladite surface de chauffe, de sorte à éviter un rayonnement thermique direct de la surface de chauffe vers lesdites tranches de pain.

De préférence, selon cette réalisation précitée de l'accessoire, l'organe réflecteur comprend deux plaques secondaires prolongeant respectivement deux extrémités opposées de la plaque principale, lesdites plaques secondaires étant inclinées vers le haut. Ledit organe réflecteur pourrait comporter quatre plaques secondaires disposées respectivement sur les quatre côtés de la plaque principale, lorsque celle-ci a une forme rectangulaire. Cela permet de réfléchir également le rayonnement thermique provenant de la surface de chauffe, autour de la plaque principale, et dirigé vers les tranches de pain disposées sur l'organe de support.

Selon l'invention, la plaque principale est de forme longitudinale rectangulaire et comprend une largeur comprise entre 70 mm et 110 mm, de préférence égale à 90 mm. On pourrait toutefois envisager d'autres formes pour la plaque principale, selon la manière dont sont disposées les tranches de pain sur l'organe de support.

Selon une réalisation de l'accessoire, l'organe réflecteur porte l'organe de support et comporte des moyens d'appui sur la surface de chauffe de l'appareil de cuisson. Selon une variante envisageable, l'organe de support peut porter l'organe réflecteur et comporter des moyens d'appui sur la surface de chauffe.

L'invention concerne également un appareil de cuisson comprenant une surface de chauffe apte à recevoir des aliments à cuire et un accessoire présentant l'une et/ou l'autre des caractéristiques précitées objets de l'invention et apte à recevoir des tranches de pain à réchauffer.

Selon une réalisation préférentielle de l'appareil de cuisson, ledit accessoire est amovible afin de faciliter son nettoyage et celui de la surface de chauffe.

L'appareil de cuisson selon l'invention peut être du type plancha ou du type barbecue, la surface de chauffe étant selon le cas une plaque pleine, une plaque ajourée ou une grille.

Selon un aspect de l'invention, l'appareil de cuisson comprend des moyens de maintien et/ou de positionnement de l'accessoire sur la surface de chauffe dans une position prédéterminée.

Bien entendu l'appareil de cuisson comportera une source de chaleur disposées sous la surface de chauffe. De préférence, l'appareil est du type électrique, c'est-à-dire ayant une source d'énergie électrique, ladite source de chaleur étant alors du type résistance électrique. On pourrait toutefois envisager des appareils de cuisson disposant d'une source de chaleur au gaz ou au charbon de bois, en demeurant dans le cadre de l'invention.

L'invention concerne également un procédé de cuisson au moyen d'un appareil de cuisson présentant les caractéristiques précitées objets de l'invention. Le procédé comprend une étape de réchauffage d'au moins deux tranches de pain disposées sur l'accessoire positionné sur la surface de chauffe et une étape de cuisson d'au moins un morceau d'aliment, notamment une viande, positionné sur la surface de chauffe, lesdites étapes de réchauffage et de cuisson étant réalisées concomitamment. Cela permet de réduire le temps de préparation et d'utiliser un seul et même appareil de cuisson pour la préparation d'une recette alimentaire à base de tranches de pain chauffées et d'un aliment cuit ou grillé pris en sandwich entre deux tranches de pain chauffées.

Lors de la préparation de hamburgers, les tranches de pain à hamburger sont disposées sur l'organe de support de l'accessoire placé sur la surface de chauffe de l'appareil de cuisson et les steaks hachés sont simultanément placés sur ladite surface de chauffe. Lorsque cette surface de chauffe est du type plaque ajourée ou non, des tranches d'oignon peuvent également être cuites ou dorées sur la plaque, ce qui est moins envisageables lorsque la surface de chauffe est une grille de barbecue.

### Brève description des figures

Les caractéristiques et avantages de l'invention apparaîtront à la lecture de la description suivante s'appuyant sur des figures, parmi lesquelles :
[Fig. 1] La figure 1 illustre une vue d'ensemble d'un accessoire selon l'invention recevant des tranches de pain, ledit accessoire étant positionné sur une surface de chauffe de type grille de barbecue, sur laquelle reposent des steaks ;
[Fig. 2] La figure 2 illustre l'accessoire et la grille de la figure 1, sans les tranches de pain et sans les steaks ;
[Fig. 3] La figure 3 illustre l'accessoire seul ;
[Fig. 4] La figure 4 illustre l'organe réflecteur de l'accessoire des figures 1 à 3 ;
[Fig. 5] La figure 5 illustre l'organe de support de l'accessoire des figures 1 à 3.

### Description détaillée de l'invention

Dans la suite de la description, le terme appareil est utilisé pour désigner l'appareil de cuisson selon l'invention, sans indication contraire. En outre, les mêmes références sont utilisées pour définir les mêmes caractéristiques, sauf indication contraire.

Les termes « haut », « bas », « supérieur » et « inférieur » qui pourraient être utilisés dans la présente description le seront en considération de la position normale de l'accessoire reposant sur la surface de chauffe de l'appareil, lequel peut être placé sur un plan de table ou de cuisine ou sur un piètement, ladite surface de chauffe étant disposée plus ou moins horizontalement.

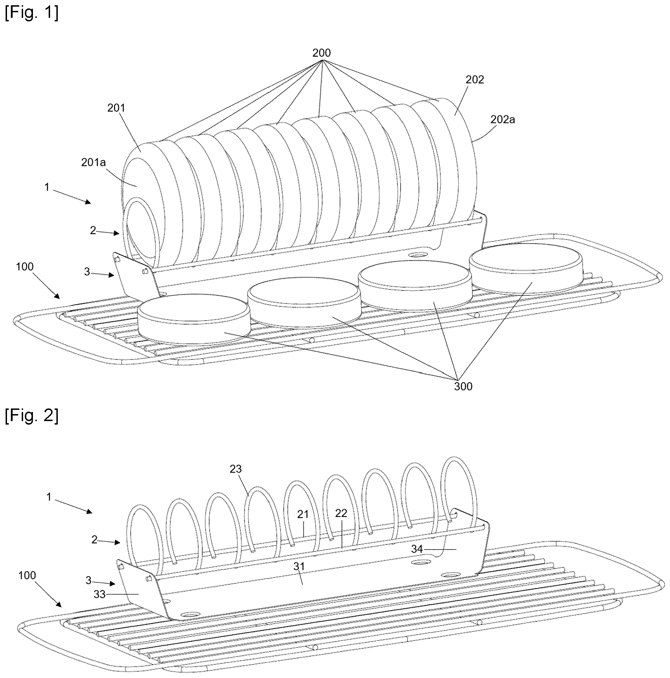

Sur la figure 1 est illustré un accessoire 1 qui est positionné sur une surface de chauffe 100 d'un appareil (non). L'appareil n'est pas illustré en détail, mais celui-ci peut être du type plancha ou barbecue comme cela existe déjà sur le marché. Sur la figure 1, la surface de chauffe 100 est une grille, l'appareil étant du type barbecue. On pourrait toutefois remplacer la grille par une plaque pleine ou par une plaque ajourée, dans quel cas l'appareil sera du type plancha. La conception d'un tel appareil avec une surface de chauffe 100 du type grille ou du type plaque ajourée ou non est bien connue de l'homme du métier ; celle-ci n'est donc pas détaillée ci-après. L'appareil comprend notamment une source de chaleur disposée sous la surface de chauffe 100. A titre d'exemples, cette source de chaleur peut être une résistance électrique agencée sous la grille ou sous la plaque ajourée ou non, un brûleur au gaz agencé sous une plaque ajourée ou non, voire du charbon de bois disposé sous la grille.

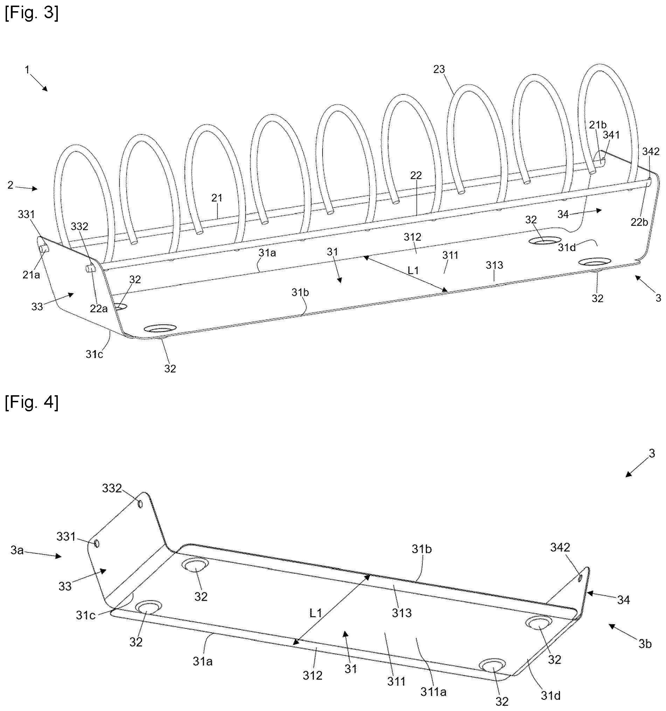

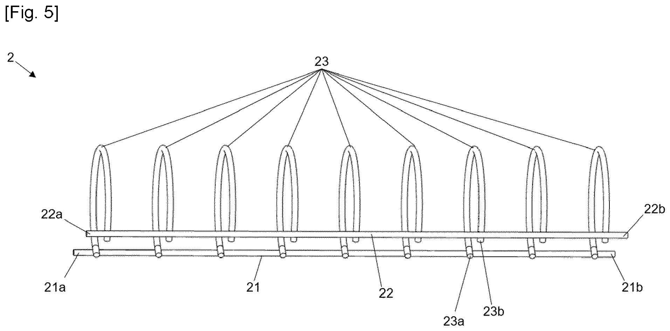

En regard des figures 1 à 3 et 5, l'accessoire 1 comprend un organe de support 2 qui permet la réception de tranches de pain 200 en les maintenant parallèles entre elles les unes à la suite des autres et plus ou moins verticalement. Pour cela, l'organe de support 2 comprend deux tiges longitudinales 21, 22 qui s'étendent parallèlement entre elles dans le sens de la longueur de l'accessoire 1, celles-ci étant disposées dans un plan plus ou moins horizontal, parallèlement à la surface de chauffe 100. Les tranches de pain 200 reposent sur ces deux tiges longitudinales 21, 22. Sur la figure 1, ces tranches de pain 200 sont des tranches de pain à hamburger et elles présentent plus ou moins une forme de palet ; on pourrait prévoir des tranches de pain 200 d'une forme différente, par exemple une forme carrée, rectangulaire ou ovale, voire aussi d'une épaisseur différente. Cet organe de support 2 comprend également des tiges courbées 23 qui sont de préférence toutes identiques, chaque tige courbée 23 présentant une forme en arc de cercle avec ses deux extrémités 23a, 23b qui sont fixées, notamment par soudure, aux deux tiges longitudinales 21, 22. Les tiges courbées 23 sont parallèles et espacées entre elles les une à la suite des autres, avec un écartement adapté à l'épaisseur des tranches de pain 200 destinées à être disposées entre deux tiges courbées 23 successives. Ces tiges courbées 23 sont fixées plus ou moins en équerre sur les tiges longitudinales 21, 22. Comme l'illustrent les figures 1 et 2, par exemple, l'accessoire comprend préférentiellement neuf tiges courbées 23 permettant de placer de manière intercalée huit tranches de pain 200 en les maintenant plus ou moins verticalement, lesdites huit tranches de pain 200 reposant sur les deux tiges longitudinales 21, 22. On pourrait prévoir des variantes de l'accessoire 1 avec un organe de support 2 comprenant de préférence entre trois et onze tiges courbées 23 permettant respectivement le maintien de deux à dix tranches de pain 200.

Selon l'invention, cet organe de support 2 est configuré de sorte à maintenir les tranches de pain 200 à une distance comprise entre 30 et 40 mm de la surface de chauffe 100.

En regard des figures 1 à 5, l'accessoire 1 comprend également un organe réflecteur 3 qui, dans le cas présent, remplit deux fonctions. Tout d'abord, l'organe réflecteur 3 permet de poser l'accessoire 1 sur la surface de chauffe 100 et de porter l'organe de support 2 en maintenant les tranches de pain 200 à distance de ladite surface de chauffe 100. Ensuite, cette organe réflecteur 3 permet de réfléchir le rayonnement thermique des éléments de chauffe pour éviter une exposition directe des tranches de pain 200 à ce rayonnement thermique, de sorte que lesdites tranches de pain 200 puissent réchauffer sans cuire ni griller surtout pour certains appareils de cuisson comme les grills où la surface de chauffe 100 est ajourée et laisse entrevoir des éléments chauffants. L'organe réflecteur 3 comprend une plaque principale 31 qui présente une forme allongée rectangulaire s'étendant sur toute la longueur de l'organe de support 2, ladite plaque principale 31 ayant une largeur L1 comprise entre 70 mm et 110 mm, de préférence égale à 90 mm, adaptée à la largeur des tranches de pain 200. Cette plaque principale 31 comprend une partie centrale 311 et deux parties latérales 312, 313 qui s'étendent sur la longueur de ladite plaque principale 31, lesdites parties latérales 312, 313 étant légèrement pliées vers le haut par rapport à ladite partie centrale 311. Sur la face inférieure 311a de la partie centrale 311, quatre bossages 32 sont uniformément répartis et constituent des appuis permettant de poser l'accessoire 1 sur la surface de chauffe 100 en positionnant la plaque principale 31 parallèlement à ladite surface de chauffe 100. Cette plaque principale 31 permet de réfléchir le rayonnement thermique de la surface de chauffe 100 émis depuis le dessous de ladite plaque principale 31, mais aussi celui émis à proximité des bords latéraux 31a, 31b de ladite plaque principale 31 du fait de la légère inclinaison desdits parties latérales 312, 313. L'organe réflecteur 3 comprend en outre deux plaques secondaires 33, 34 agencées aux extrémités longitudinales 31c, 31d de la plaque principale 31. Ces plaques secondaires 33, 34 sont dirigées vers le haut avec une inclinaison vers l'extérieur vis-à-vis desdites extrémités longitudinales 31c, 31d. De préférence, la plaque principale 31 et les deux plaques secondaires 33, 34 sont mises en oeuvre au moyen d'une seule et même plaque, par pliage de celle-ci. La première plaque secondaire 33 comprend deux premiers orifices 331, 332 qui reçoivent respectivement les deux premières extrémités 21a, 22a des deux tiges longitudinales 21, 22 de l'organe de support 2. De même, la seconde plaque secondaire 34 comprend deux seconds orifices 341, 342 qui reçoivent respectivement les deux secondes extrémités 21b, 22b des deux tiges longitudinales 21, 22 de l'organe de support 2. Ainsi, l'organe de support 2 est porté par les deux plaques secondaires 33, 34 de l'organe réflecteur 3, ce qui permet de maintenir ledit organe de support 2 et les tranches de pain 200 à distance de la surface de chauffe 100 en interposant ledit organe réflecteur 3 entre ladite surface de chauffe 100 et ledit organe de support 2. Ces deux plaques secondaires 33, 34 permettent également de réfléchir le rayonnement thermique émis par la surface de chauffe 100, au-delà des extrémités longitudinales 3a, 3b de l'organe réflecteur 3, de sorte à éviter que les faces externes 201a, 202a des deux tranches de pain 201, 202 extrêmes cuisent ou grillent.

La surface de chauffe 100 de l'appareil et l'accessoire 1 sont dimensionnés pour que ledit accessoire 1 ne recouvre qu'une partie de ladite surface de chauffe 100, ce qui permet de positionner des aliments à cuire ou à griller sur cette surface de chauffe 100. Idéalement, l'appareil de cuisson comprend des moyens de maintien de l'accessoire 1 sur la surface de chauffe 100 dans une position prédéterminée. de tels moyens sont par exemple des orifices (non illustrés) ménagés sur la surface de chauffe 100 et aptes à recevoir des moyens de maintien complémentaires de l'accessoire 1. Sur la figure 1, quatre steaks 300 sont posés sur la surface de chauffe 100, devant l'accessoire 1. Ainsi, la cuisson des steaks 300 et le réchauffage des tranches de pain 200 sont réalisés concomitamment. D'autres aliments que des steaks 300 pourraient aussi être cuits ou grillés concomitamment au réchauffage des tranches de pain 200 et des steaks 300, par exemple des tranches d'oignon et des tranches de tomate, dans quel cas la surface de chauffe 100 sera préférentiellement une plaque ajourée ou non, plutôt qu'une grille. Les steaks 300 pourraient aussi être remplacés par du blanc de poulet ou du filet de poisson.

Des variantes de l'accessoire 1 sont envisageables dans le cadre de l'invention. En particulier, l'organe de support 2 pourrait prendre appui sur la surface de chauffe 100 et porter l'organe réflecteur 3. Par exemple, en s'appuyant sur le mode de réalisation des figures 1 à 5, il est possible de supprimer les bossage 32 sur la partie centrale 311 de la plaque principale 31 et de réduire la longueur des plaques secondaires 33, 34 sur l'organe réflecteur 3 et, en outre, d'ajouter des pattes (non illustrées) prolongeant en équerre vers le bas les premières 21a, 22a et secondes 21b, 22b extrémités des tiges longitudinales 21, 22 sur une hauteur supérieure à celle desdites plaques secondaires 33, 34, de sorte que ces pattes prennent appui sur la surface de chauffe 100 et que la plaque principale 31 soit légèrement décalée au-dessus de ladite surface de chauffe 100 tout en restant en dessous des tranches de pain 200 posées sur l'organe de support 2. Selon une variante, les tiges incurvées 23 pourraient avoir une forme différente de celle d'un arc de cercle, par exemple une forme en U inversé.

L'accessoire 1 est de préférence simplement posé sur la surface de chauffe 100, ce qui le rend complètement amovible et facilite son nettoyage séparément. Il serait toutefois possible de prévoir une variante d'appareil selon laquelle l'accessoire 1 et la surface de chauffe 100 seraient assemblés de manière permanente voire de manière démontable.

L'accessoire 1 sera de préférence réalisé dans une matière métallique assurant une bonne réflexion du rayonnement thermique et une bonne résistance à la chaleur.

Bien que l'invention ait été décrite en liaison avec des exemples particuliers de réalisation, il est bien évident qu'elle n'y est nullement limitée.

Des modifications restent possibles, notamment du point de vue de l'agencement et de la constitution des différents éléments ou par substitution d'équivalents techniques, sans sortir pour autant du domaine de protection de l'invention telle que définie par les revendications annexées.

## Revendications

1. Accessoire (1) pour un appareil de cuisson équipé d'une surface de chauffe (100) tel qu'une plancha ou un barbecue, ledit accessoire (1) étant apte à être positionné sur la surface de chauffe (100) et comprenant un organe de support (2) d'au moins deux tranches de pain (200), notamment des tranches de pain à hamburger, l'organe de support comprend deux tiges longitudinales (21, 22) disposées parallèlement dans un plan horizontal lorsque ledit accessoire est positionné sur ladite surface de chauffe et au moins trois tiges courbées (23) en arc de cercle dont les deux extrémités (23a, 23b) sont fixées respectivement aux deux tiges longitudinales (21, 22), lesdites tiges courbées (23) étant espacées entre elles et disposées parallèlement les unes à la suite des autres et perpendiculairement aux deux tiges longitudinales (21, 22), de sorte que les au moins deux tranches de pain (200) reposent sur les deux tiges longitudinales (21, 22) et sont intercalées entre les tiges courbées (23) qui assurent leur maintien plus ou moins verticalement, l'accessoire comprenant un organe réflecteur (3) positionné entre la surface de chauffe (100) et l'organe de support (2) des au moins deux tranches de pain (200) de sorte à éviter une exposition directe des au moins deux tranches de pain aux rayonnements des éléments chauffants, l'organe réflecteur (3) comprenant une plaque principale (31) qui s'étend parallèlement à la surface de chauffe (100), en-dessous de l'organe de support (2), lorsque ledit accessoire (1) est positionné sur ladite surface de chauffe (100), **caractérisé en ce que** la plaque principale (31) est de forme longitudinale rectangulaire et comprend une largeur (L1) comprise entre 70 mm et 110 mm, de préférence égale à 90 mm et **en ce que** l'organe de support est configuré pour maintenir les au moins deux tranches de pain à une distance comprise entre 30 et 40 mm de la surface de chauffe.

2. Accessoire (1) selon la revendication 1, dans lequel l'organe réflecteur (3) comprend deux plaques secondaires (33, 34) prolongeant respectivement deux extrémités opposées (31c, 31d) de la plaque principale (31), lesdites plaques secondaires (33, 34) étant inclinées vers le haut.

3. Accessoire (1) selon l'une quelconque des revendications 1 ou 2, dans lequel l'organe réflecteur (3) porte l'organe de support (2) et comporte des moyens d'appui (32) sur la surface de chauffe (100) de l'appareil de cuisson.

4. Appareil de cuisson comprenant une surface de chauffe (100) apte à recevoir des aliments (300) à cuire et comprenant un accessoire (1) selon l'une quelconque des revendications 1 à 3, apte à recevoir des tranches de pain à réchauffer.

5. Appareil de cuisson selon la revendication 4, dans lequel l'accessoire (1) est amovible.

6. Appareil de cuisson selon l'une quelconque des revendications 4 ou 5, dans lequel la surface de chauffe (100) est une plaque pleine, une plaque ajourée ou une grille.

7. Appareil de cuisson selon l'une des revendications 4 à comprenant des moyens de maintien et/ou de positionnement de l'accessoire (1) sur la surface de chauffe (100) dans une position prédéterminée.

8. Procédé de cuisson au moyen d'un appareil de cuisson selon l'une quelconque des revendication 4 à 7, lequel comprend une étape de réchauffage d'au moins deux tranches de pain (200) disposées sur l'accessoire (1) positionné sur la surface de chauffe (100) et une étape de cuisson d'au moins un morceau d'aliment (300), notamment une viande, positionné sur la surface de chauffe (100), lesdites étapes de réchauffage et de cuisson étant réalisées concomitamment.

## Patentansprüche

1. Zubehör (1) für ein Kochgerät, das mit einer Erwärmungsoberfläche (100), wie einer Plancha oder einem Grill ausgestattet ist, wobei das Zubehör (1) in der Lage ist, auf der Erwärmungsoberfläche (100) positioniert zu werden, und umfassend ein Trägerbauteil (2) für mindestens zwei Brotscheiben (200), insbesondere Brotscheiben für Hamburger, wobei das Trägerbauteil zwei längsgerichtete Stangen (21, 22), die parallel in einer horizontalen Ebene angeordnet sind, wenn das Zubehör auf der Erwärmungsoberfläche positioniert ist, und mindestens drei kreisbogenförmig gekrümmte Stangen (23) umfasst, von denen die zwei Enden (23a, 23b) jeweils an den zwei längsgerichteten Stangen (21, 22) fixiert sind, wobei die gekrümmten Stangen (23) untereinander beabstandet und nacheinander parallel und senkrecht zu den zwei längsgerichteten Stangen (21, 22) derart angeordnet sind, dass mindestens zwei Brotscheiben (200) auf den zwei längsgerichteten Stangen (21, 22) ruhen und zwischen gekrümmten Stangen (23) eingefügt sind, die den mehr oder weniger vertikalen Halt sicherstellen, wobei das Zubehör ein Reflektorbauteil (3) umfasst, das zwischen der Erwärmungsoberfläche (100) und dem Trägerbauteil (2) der mindestens zwei Brotscheiben (200) derart positioniert ist, um eine direkte Exposition der mindestens zwei Brotscheiben gegenüber Strahlungen der erwärmenden Elemente zu vermeiden, wobei das Reflektorbauteil (3) eine Hauptplatte (31) umfasst, die sich unterhalb des Trägerbauteils (2) parallel zu der Erwärmungsoberfläche (100) erstreckt, wenn das Zubehör auf der Erwärmungsoberfläche (100) positioniert ist, **dadurch gekennzeichnet, dass** die Hauptplatte (31) von längsgerichteter, rechteckiger Form ist und eine Breite (L1) zwischen 70 mm und 110 mm, vorzugsweise von 90 mm umfasst, und dadurch, dass das Trägerbauteil konfiguriert ist, um die mindestens zwei Brotscheiben in einem Abstand zwischen 30 und 40 mm von der Erwärmungsoberfläche zu halten.

2. Zubehör (1) nach Anspruch 1, wobei das Reflektorbauteil (3) zwei sekundäre Platten (33, 34) umfasst, die jeweils die zwei gegenüberliegenden Enden (31c, 31d) der Hauptplatte (31) verlängern, wobei die sekundären Platten (33, 34) nach oben geneigt sind.

3. Zubehör (1) nach einem der Ansprüche 1 oder 2, wobei das Reflektorbauteil (3) das Trägerbauteil (2) trägt und auf der Erwärmungsoberfläche (100) des Kochgeräts Auflagemittel (32) beinhaltet.

4. Kochgerät, umfassend eine Erwärmungsoberfläche (100), die in der Lage ist, zu kochende Lebensmittel (300) aufzunehmen und umfassend ein Zubehör (1) nach einem der Ansprüche 1 bis 3, das in der Lage ist, aufzuwärmende Brotscheiben aufzunehmen.

5. Kochgerät nach Anspruch 4, wobei das Zubehör (1) abnehmbar ist.

6. Kochgerät nach einem der Ansprüche 4 oder 5, wobei die Erwärmungsoberfläche (100) eine massive Platte, eine durchbrochene Platte oder ein Gitter ist.

7. Kochgerät nach einem der Ansprüche 4 bis 6, umfassend Mittel zum Halten und/oder zur Positionierung des Zubehörs (1) in einer vorbestimmten Position auf der Erwärmungsoberfläche (100).

8. Verfahren zum Kochen mittels eines Kochgeräts nach einem der Ansprüche 4 bis 7, das einen Schritt des Aufwärmens von mindestens zwei Brotscheiben (200), die auf dem Zubehör (1) angeordnet sind, das auf der Erwärmungsoberfläche (100) positioniert ist, und einen Schritt des Kochens mindestens eines Lebensmittelstücks (300) umfasst, insbesondere Fleisch, das auf der Erwärmungsoberfläche (100) positioniert ist, wobei die Schritte des Aufwärmens und des Kochens gleichzeitig durchgeführt werden.

## Claims

1. Accessory (1) for a cooking appliance equipped with a heating surface (100) such as a griddle or a barbecue, said accessory (1) being capable of being positioned on the heating surface (100) and comprising a member (2) for supporting at least two slices of bread (200), in particular burger bun slices, the support member comprises two longitudinal rods (21, 22) disposed parallel in a horizontal plane when said accessory is positioned on said heating surface, and at least three arc-shaped curved rods (23), the two ends (23a, 23b) of which are fixed respectively to the two longitudinal rods (21, 22), said curved rods (23) being spaced apart from one another, and disposed parallel following one another and perpendicularly to the two longitudinal rods (21, 22), such that the at least two slices of bread (200) rest on the two longitudinal rods (21, 22) and are inserted between the curved rods (23) which ensure they are held more or less vertically, the accessory comprising a reflective member (3) positioned between the heating surface (100) and the support member (2) of the at least two slices of bread (200), so as to avoid a direct exposure of the at least two slices of bread to radiations of the heating elements, the reflective member (3) comprising a main plate (31) which extends parallel to the heating surface (100), below the support member (2), when said accessory (1) is positioned on said heating surface (100), **characterised in that** the main plate (31) is rectangularly, longitudinally shaped and comprises a width (L1) of between 70mm and 110mm, preferably equal to 90mm, and **in that** the support member is configured to hold the at least two slices of bread at a distance of between 30 and 40mm from the heating surface.

2. Accessory (1) according to claim 1, wherein the reflective member (3) comprises two secondary plates (33, 34) extending respectively two opposite ends (31c, 31d) of the main plate (31), said secondary plates (33, 34) being inclined upwards.

3. Accessory (1) according to any one of claims 1 or 2, wherein the reflective member (3) carries the support member (2) and comprises bearing means (32) on the heating surface (100) of the cooking appliance.

4. Cooking appliance comprising a heating surface (100) capable of receiving food (300) to be cooked and comprising an accessory (1) according to any one of claims 1 to 3, capable of receiving slices of bread to be heated.

5. Cooking appliance according to claim 4, wherein the accessory (1) is removable.

6. Cooking appliance according to any one of claims 4 or 5, wherein the heating surface (100) is a solid plate, a perforated plate or a grill.

7. Cooking appliance according to any one of claims 4 to 6, comprising means for holding and/or positioning the accessory (1) on the heating surface (100) in a predetermined position.

8. Method for cooking by means of a cooking appliance according to any one of claims 4 to 7, which comprises a step of heating at least two slices of bread (200) disposed on the accessory (1) positioned on the heating surface (100) and a step of cooking at least one piece of food (300), in particular a meat, positioned on the heating surface (100), said heating and cooking steps being carried out together.
